# EUROPÄISCHE PATENTSCHRIFT

(11) **EP 3 447 346 B1**
(45) Veröffentlichungstag und Bekanntmachung des Hinweises auf die Patenterteilung: **18.11.2020**
(21) Anmeldenummer: 18181917.8
(22) Anmeldetag: 05.07.2018
(51) Int. Cl.: F16K 1/00, F16K 31/08, F16K 31/385

(54) **VENTIL, INSBESONDERE SERVOVENTIL**
VALVE, IN PARTICULAR SERVO VALVE
SOUPAPE, EN PARTICULIER SERVOSOUPAPE

(30) Priorität: 06.07.2017 DE 102017115191
(43) Veröffentlichungstag der Anmeldung: 27.02.2019
(73) Patentinhaber: A. u. K. Müller GmbH & Co. KG, 40595 Düsseldorf (DE)
(72) Erfinder:
(74) Vertreter: Feder Walter Ebert

(56) Entgegenhaltungen:
- EP-A1- 2 536 507
- EP-A1- 2 865 928
- EP-B1- 2 868 953
- WO-A1-2014/019826
- WO-A1-2018/162125
- AT-U1- 353
- DE-A1- 2 444 469
- DE-A1-102011 077 124
- DE-A1-102014 214 379
- DE-U1-202016 001 106
- JP-B2- 2 928 458

## Beschreibung

Die vorliegende Erfindung betrifft eine Steuerungsvorrichtung für ein Ventil, insbesondere ein eigenmediumbetätigtes Servoventil, mit einer als Kugelschreiber-Mechanik ausgebildeten Schaltvorrichtung zum Öffnen und Schließen eines Ventils. Einen weiteren Gegenstand der Erfindung bildet ein Ventil mit einer solchen Steuerungsvorrichtung.

Derartige Steuervorrichtungen werden in der Ventiltechnik für verschiedene Anwendungen beispielsweise im Sanitär- oder Trinkwasserbereich dazu eingesetzt, ein Ventil zu öffnen oder zu schließen.

Aus der EP 2 868 953 B1 ist eine Steuerungsvorrichtung für ein Ventil bekannt, bei welcher zur Betätigung des Ventils eine Schaltvorrichtung verwendet wird, welche nach Art einer Kugelschreiber-Mechanik ausgebildet ist. Durch Betätigung der Kugelschreiber-Mechanik wird das Ventil zwischen dessen Offen- und dessen Schließstellung hin und her geschaltet, wodurch sich eine einfache Möglichkeit zur Betätigung des Ventils gibt. Auch wenn sich diese Art von Schaltvorrichtung zum Schalten eigenmediumbetätigter Servoventile für viele Anwendungen sehr bewährt hat, gibt es in der Praxis jedoch auch solche Anwendungen, bei welchen das Ventil nicht immer voll, sondern zur Reduzierung der Durchflussmenge auch nur teilweise geöffnet werden soll. Aus der JP2928458B2 ist eine Steuerungsvorrichtung mit einer als Kugelschreiber-Mechanik ausgebildeten Schaltvorrichtung mit drei Schaltstufen bekannt.

Vor diesem Hintergrund ist es die **Aufgabe** der vorliegenden Erfindung, eine Steuerungsvorrichtung der eingangs genannten Art und ein entsprechendes Ventil derart weiterzubilden, dass diese auch ein nur teilweises Öffnen des Ventils erlauben.

Dieser Aufgabe wird bei einer Steuerungsvorrichtung der eingangs genannten Art durch die Merkmale des kennzeichnenden Anteils von Anspruch 1 gelöst.

Durch eine weitere, dritte Schaltstufe kann das Ventil auch teilweise geöffnet werden, ohne auf die Vorteile einer herkömmlichen Kugelschreiber-Mechanik als Schaltvorrichtung verzichten zu müssen. Es ist dabei nicht erforderlich, dass genau drei Schaltstufen vorgesehen sind. Es können je nach Anwendung auch vier oder noch mehr Schaltstufen vorgesehen werden. Eine vorteilhafte Ausgestaltung sieht vor, dass eine erste Schaltstufe der geöffneten Stellung des Ventils, eine zweite Schaltstufe der geschlossenen Stellung des Ventils und eine dritte Schaltstufe einer Zwischenstellung des Ventils entspricht. In der Zwischenstellung kann die Durchflussmenge des Ventils gegenüber der voll geöffneten Stellung beispielsweise um 50% reduziert sein.

Vorteilhaft ist in diesem Zusammenhang ferner, wenn die Schaltstufen durch mehrfaches Betätigen der Schaltvorrichtung nacheinander ansteuerbar sind. Beispielsweise kann durch einmaliges Betätigen der Schaltvorrichtung das Ventil von dessen geschlossener Stellung in dessen voll geöffnete Stellung überführt werden. Durch nochmaliges Betätigen kann dann das sich in der voll geöffneten Stellung befindliche Ventil in eine Zwischenstellung überführt werden. Durch nochmaliges Betätigen kann dann beispielsweise der geschlossene Zustand oder eine weitere Zwischenstellung angesteuert werden. Es ergibt sich eine sehr intuitiv zu bedienende Vorrichtung zur Steuerung des Ventils in mehreren Schaltstufen.

Von besonderem Vorteil im Hinblick auf eine einfache Konstruktion ist eine Ausgestaltung, bei welcher die Schaltvorrichtung über ein Handbetätigungselement betätigbar ist. Das Handbetätigungselement kann beispielsweise als Druckstück, Betätigungskopf, Betätigungsbolzen oder ähnliches ausgebildet sein, der sich ähnlich dem Druckstück eines Kugelschreibers bei Betätigung axial verlagert. Alternativ kann die Schaltvorrichtung auch nicht von Hand, sondern motorisch beispielweise elektromotorisch oder pneumatisch betätigt werden.

In weiterer Ausgestaltung ist vorgesehen, dass die Schaltvorrichtung zum Umschalten zwischen den Schaltstufen zwei bewegbare Schaltelemente und ein feststehendes Schaltelement aufweist. Durch Bewegung der beiden bewegbaren Schaltelemente gegenüber dem feststehenden Schaltelement und durch eine Relativbeweglichkeit der beiden Schaltelemente untereinander kann nach dem Kugelschreiber-Prinzip auf einfache Art und Weise ein Umschalten zwischen den verschiedenen Schaltstufen erreicht werden.

Eine weitere Ausgestaltung sieht vor, dass das feststehende Schaltelement mehrere Rastausnehmungen aufweist, die mit einem an einem bewegbar angeordneten Schaltelement angeordneten Rastelement zusammenwirken. Die einzelnen Rastausnehmungen können dabei den jeweiligen Schaltstufen der Schaltvorrichtung entsprechen. Durch Überführung des Rastelements in die eine oder andere Rastausnehmung kann dann die jeweilige Schaltstufe erreicht werden.

Von Vorteil ist eine Ausgestaltung, nach welcher die der ersten Schaltstufe entsprechende Rastausnehmung kanalförmig ausgebildet und die der zweiten und dritten Schaltstufe entsprechenden Rastausnehmungen als Rastkonturen ausgebildet sind. Das mit den Rastausnehmungen zusammenwirkende Rastelement kann entgegen der Betätigungsrichtung der Schaltvorrichtung vorgespannt sein. Die Vorspannung kann über eine Feder erzeugt werden, beispielsweise eine Spiralfeder. Innerhalb der kanalförmig ausgebildeten Rastausnehmung kann sich die Feder maximal entspannen. In dieser Position kann das Ventil dann voll geöffnet sein. In der zweiten und dritten Schaltstufe kann das Rastelement über die Kraft der Feder in die als Rastkontur ausgebildeten Rastausnehmungen eintauchen und dort verrasten. In diesen Stellungen kann das Ventil geschlossen oder teilweise geöffnet sein. Vorteilhaft sind die Rastausnehmungen in Betätigungsrichtung der Schaltvorrichtung gegeneinander versetzt angeordnet. Die in Betätigungsrichtung der Schaltvorrichtung weiter vorne angeordnete Rastausnehmung kann der geschlossenen Ventilstellung entsprechen. Weiter hinten liegende Rastausnehmungen können der geöffneten oder teilweise geöffneten Stellungen entsprechen.

Erfindungsgemäß sieht mit Blick auf eine mediengetrennte Ausgestaltung des Ventils vor, dass die Schaltvorrichtung mit einem Magneten gekoppelt ist. Der Magnet wiederum kann mit einem beispielsweise als bistabiler Plunger eines Elektromagnetventils ausgebildeten Betätigungselement berührungslos gekoppelt sein, wodurch sich eine Medientrennung zwischen einerseits der Steuerungsvorrichtung und andererseits den vom Medium durchströmten Bereichen des Ventils ergibt. Dies hat insbesondere Vorteile, da Stau- und Totwasserräume vermieden werden, wodurch sich ein sehr hygienischer Aufbau des Ventils ergibt.

Während sich über die verschiedenen Schaltstufen die Durchflussmenge des Ventils grob einstellen lässt, kann es zum Zwecke einer Feineinstellung der Durchflussmenge vorteilhaft sein, wenn die Schaltvorrichtung eine Endlageneinstellung zur Einstellung mindestens einer Endlage des Magneten in mindestens einer Schaltstufe aufweist. Auf diese Weise kann der Durchfluss in den jeweiligen Schaltstufen feinjustiert werden. Erfindungsgemäß kann bei einer Steuerungsvorrichtung mit genau drei Schaltstufen über die Endlageneinstellung die mittlere Schaltstufe feinjustiert und hierdurch der Durchfluss des Ventils genau angepasst werden. Auch kann die voll geöffnete Stellung des Ventils über die Endlageneinstellung angepasst werden. Hierdurch ergeben sich viele Einstellmöglichkeiten der Steuerungsvorrichtung bei einem gleichzeitig einfachen und hygienischen Aufbau.

Darüber hinaus wird zur Lösung der vorstehend genannten Aufgabe bei einem Ventil vorgeschlagen, dass dieses eine Steuerungsvorrichtung mit einem oder mehreren der vorstehend genannten Merkmale aufweist. Auch in Zusammenhang mit dem Ventil ergeben sich die bereits im Zusammenhang mit der Steuerungsvorrichtung erläuterten Vorteile.

Weitere Vorteile und Einzelheiten einer erfindungsgemäßen Steuerungsvorrichtung und eines entsprechenden Ventils werden nachfolgend unter Zuhilfenahme der beigefügten Zeichnungen von Ausführungsbeispielen erläutert werden. Darin zeigen:
- Fig. 1 bis 3: Einzelheiten eines teilweise dargestellten Ventils mit einer Steuerungsvorrichtung gemäß einem ersten Ausführungsbeispiel der Erfindung in geschnittener Ansicht,
- Fig. 4 und 5: seitliche Ansichten der Steuerungsvorrichtung, in welchen zur Veranschaulichung nicht alle Elemente vollständig dargestellt sind,
- Fig. 6 bis 8: Einzelteilansichten von Elementen der Steuerungsvorrichtung in perspektivischer, teilweise geschnittener Ansicht,
- Fig. 9 bis 12: Ansichten eines Ventils gemäß einer zweiten Ausführung mit einer Endlageneinstellung.

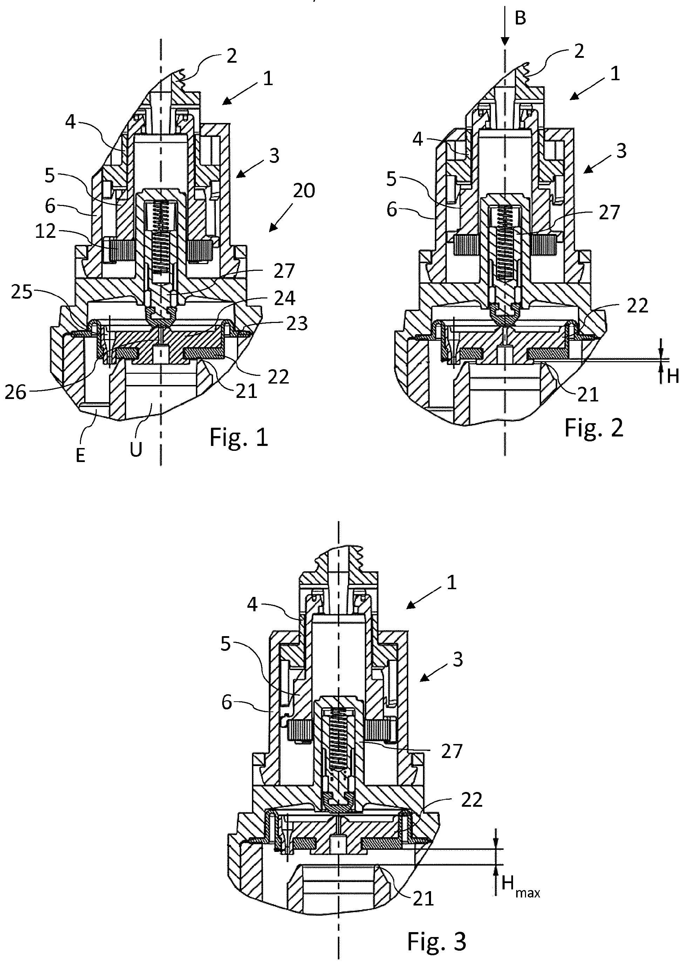

Bei dem in den Fig. 1 bis 3 dargestellten Ventil handelt es sich um ein eigenmediumbetätigtes Servoventil, welches einen im Wesentlichen ringförmigen Ventilsitz 21 und ein gegenüber dem Ventilsitz 21 bewegbares Schließelement 22 aufweist.

Das Schließelement 22 besteht im Wesentlichen aus einer Membrane 23 sowie einem tellerförmigen Element 24, welches aus einem festeren Material besteht und im Mittelbereich der Membrane 23 angeordnet ist.

Im Bereich des Ventileinlasses E ist ferner eine das Schließelement 22 durchsetzende Steueröffnung 25 vorgesehen. Die Steueröffnung 25 sorgt für einen Druckausgleich dahingehend, dass der oberhalb des Schließelements 22 herrschende Druck stets dem im Bereich des Ventileinlasses E anliegenden Druck entspricht. Aufgrund dieser Druckverhältnisse wird das Schließelement 22 bei geschlossenem Ventil 20 über den Druck des anliegenden Mediums auf den Ventilsitz 21 gehalten, so dass kein Medium in Richtung des Ventilauslasses U strömen kann.

Zum Steuern des Ventils 20 ist oberhalb des Schließelements 22 die eine Steuerungsvorrichtung 1 vorgesehen, über welche das Ventil 20 betätigt werden kann.

In Fig. 1 ist die geschlossene Stellung des Ventils 20 dargestellt, in welcher ein als Plunger ausgebildetes Steuerelement 27 eine an dem bewegbaren Schließelement 22 vorgesehene Druckentlastungsöffnung 26 verschließt. Durch Betätigung der Steuerungsvorrichtung 1 lässt sich das Ventil 20 über eine beim Ausführungsbeispiel insgesamt drei Schaltstufen S₁, S₂, S₃ aufweisende Schaltvorrichtung 3 erfindungsgemäß nicht nur in die in Fig. 3 dargestellte, voll geöffnete Stellung überführen, sondern auch in die in Fig. 2 dargestellte Zwischenstellung mit einem gegenüber der voll geöffneten Stellung in Fig. 3 reduzierten Durchfluss.

Durch Betätigung der Steuerungsvorrichtung 1 hebt das Steuerelement 27 von der Druckentlastungsöffnung 26 des Schließelements 22 ab. Da die Druckentlastungsöffnung 26 einen größeren Querschnitt als die Steueröffnung 25 aufweist, fällt dabei der Druck oberhalb des Schließelements 22 ab, weshalb sich das Schließelement 22 über den Druck des anliegenden Mediums von dem Ventilsitz 21 abhebt. Hierdurch wird der Weg des einströmenden Mediums über den Ventilsitz 22 in Richtung des Ventilauslasses U freigegeben und das Ventil geöffnet. Zum Schließen des Ventils 20 wird das Steuerelement 27 nach unten bewegt und die Druckentlastungsöffnung 26 geschlossen, so dass sich das Ventil dann aufgrund der geänderten Druckverhältnisse wieder schließt.

Zum Bewegen des Steuerelements 27 weist die Steuerungsvorrichtung 1 die Schaltvorrichtung 3 auf, über welche sich das Ventil 20 nicht nur zwischen den Endstellungen gemäß den Fig. 1 und Fig. 3, sondern auch in eine Zwischenstellung gemäß Fig. 2 überführen lässt.

Bevor der Aufbau der Steuerungsvorrichtung 1 sowie deren Funktionsweise im Einzelnen erläutert werden soll, wird nachfolgend anhand der Darstellungen in den Fig. 2 und 3 zunächst auf die verschiedenen Zustände des Ventils 20 im geöffneten Zustand eingegangen werden.

Fig. 3 zeigt die erste Schaltstufe S₁ der Schaltvorrichtung 3. In dieser ist das Schließelement 22 maximal von dem Ventilsitz abgehoben, wodurch sich eine Höhe Hₘₐₓ ergibt. In dieser Stellung ist der Durchfluss des Ventils 20 maximal, das Ventil 20 ist voll geöffnet.

Fig. 2 zeigt eine Zwischenstellung, bei welcher der Abstand des Schließelements 22 gegenüber dem Ventilsitz 21 geringer ist. Der Abstand H ist deutlich geringer und sorgt für eine entsprechend geringere Durchflussmenge durch das Ventil 20.

Die in den Fig. 1 bis 3 dargestellten Zustände lassen sich durch Betätigen der als Kugelschreiber-Mechanik ausgebildeten Schaltvorrichtung 3 der Steuerungsvorrichtung 1 erreichen, indem die Schaltvorrichtung 3 mehrfach nacheinander betätigt wird. Von der in Fig. 1 dargestellten geschlossenen Stellung kann durch eine erste Betätigung der Schaltvorrichtung 3 der voll geöffnete Zustand des Ventils 20 gemäß Fig. 3 angesteuert werden. Durch nochmaliges Betätigen der Schaltvorrichtung 3 kann dann der Durchfluss gemäß der in Fig. 2 dargestellten Zwischenstellung reduziert werden. Aus der in Fig. 2 dargestellten Zwischenstellung kann durch nochmaliges Betätigen der Schaltvorrichtung 3 dann der geschlossene Zustand gemäß Fig. 1 wieder hergestellt werden.

Hierdurch ergibt sich eine gleichsam einfache wie auch intuitive Möglichkeit zum Umschalten des Ventils zwischen den drei in den Fig. 1 bis 3 dargestellten Zuständen. Auch wenn in den Figuren nur drei Schaltzustände des Ventils dargestellt sind, ist die vorliegende Erfindung nicht auf eine Schaltvorrichtung mit drei Schaltstufen beschränkt. Vielmehr können auch vier, fünf oder noch mehr Schaltstufen vorgesehen sein.

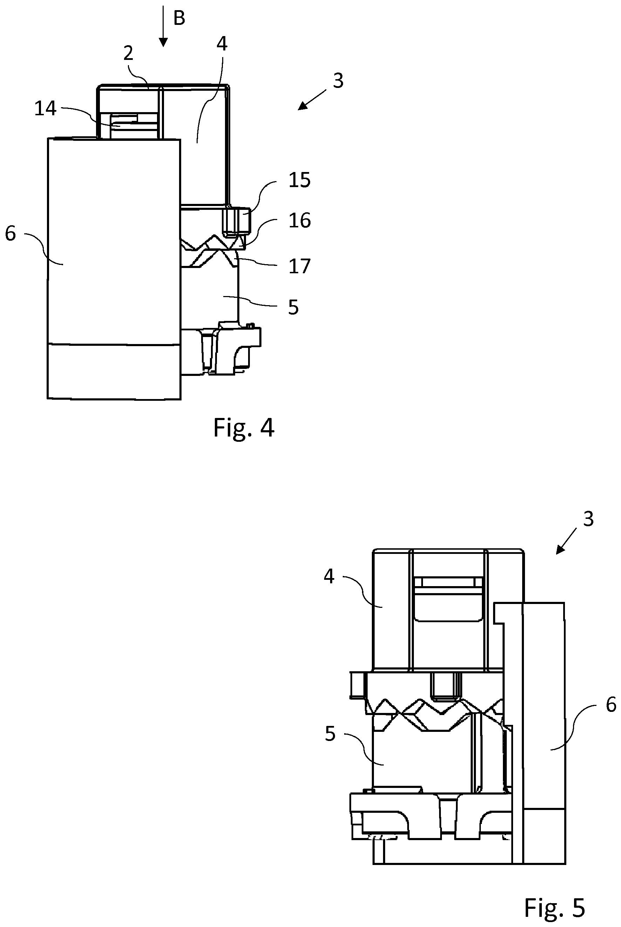

Einzelheiten der Steuerungsvorrichtung sollen nachfolgend anhand der Darstellung in den Fig. 4 bis 8 erläutert werden.

Die Fig. 4 bis 8 zeigen Einzelheiten der als Kugelschreiber-Mechanik ausgebildeten Schaltvorrichtung 3. Im Wesentlichen besteht die Schaltvorrichtung 3 aus drei Schaltelementen 4, 5, 6. Während die beiden Schaltelemente 4, 5 bewegbar gegenüber dem Ventil 20 angeordnet sind, handelt es sich bei dem Schaltelement 6 um ein feststehend angeordnetes Schaltelement. Das obere Schaltelement 4 ist für den Bediener von außen zugänglich und dient zugleich auch als Handbetätigungselement 2, welches sich ähnlich einem Kugelschreiber-Druckstück entgegen der Kraft einer Feder 14 betätigen lässt.

Durch Betätigung des Handbetätigungselements 2 wird dieses gemeinsam mit dem Schaltelement 4 axial in Richtung der Betätigungsrichtung B bewegt, wodurch sich die Feder 14 spannt. Diese axiale Bewegung des Schaltelements 4 wird über sich radial erstreckende Führungselemente 15 axial geführt, so dass sich das bewegbare Schaltelement 4 gegenüber dem feststehenden Schaltelement 6 zwar axial bewegen, nicht jedoch verdrehen lässt. In der in Fig. 4 dargestellten Position ist das Schaltelement 4 axial so weit nach unten bewegt worden, dass es mit dem zweiten bewegbaren Schaltelement 5 in Kontakt gelangt. Das Schaltelement 4 ist mit einer stirnseitigen Verzahnung 16 versehen, welche mit einer stirnseitigen Verzahnung 17 des Schaltelements 5 derart zusammenwirkt, dass infolge einer axialen Bewegung des Schaltelements 4 eine Drehbewegung des Schaltelements 5 erzeugt wird. Auch wird eine Axialbewegung des Schaltelements 5 erzeugt. Aufgrund der auf diese Weise erzeugten Drehbewegung des Schaltelements 5 ergibt sich auch eine Drehbewegung der an dem Schaltelement 5 vorgesehenen Rastelemente 11, welche mit entsprechenden Rastausnehmungen 8, 9, 10 an dem feststehenden Schaltelement 6 zusammenwirken.

Durch Betätigung des Handbetätigungselements 2 der Schaltvorrichtung 3 wird daher zunächst das Schaltelement 4 entgegen der Kraft der Feder 14 in Betätigungsrichtung B bewegt. Im nächsten Schritt treten die beiden sich gegenüberstehenden Verzahnungen 16, 17 der beiden Schaltelemente 4, 5 miteinander in Kontakt und es erfolgt ein gegenseitiges Verdrehen, bis die gegeneinander versetzt angeordneten Zähne aufeinander liegen. Im nächsten Schritt wird die Feder 14 entspannt und die an dem Schaltelement 5 vorgesehenen Rastelemente 11 rasten in einer der Rastausnehmungen 8, 9, 10, welche den verschiedenen Schaltstufen S₁, S₂, S₃ der Schaltvorrichtung 3 entsprechen, ein.

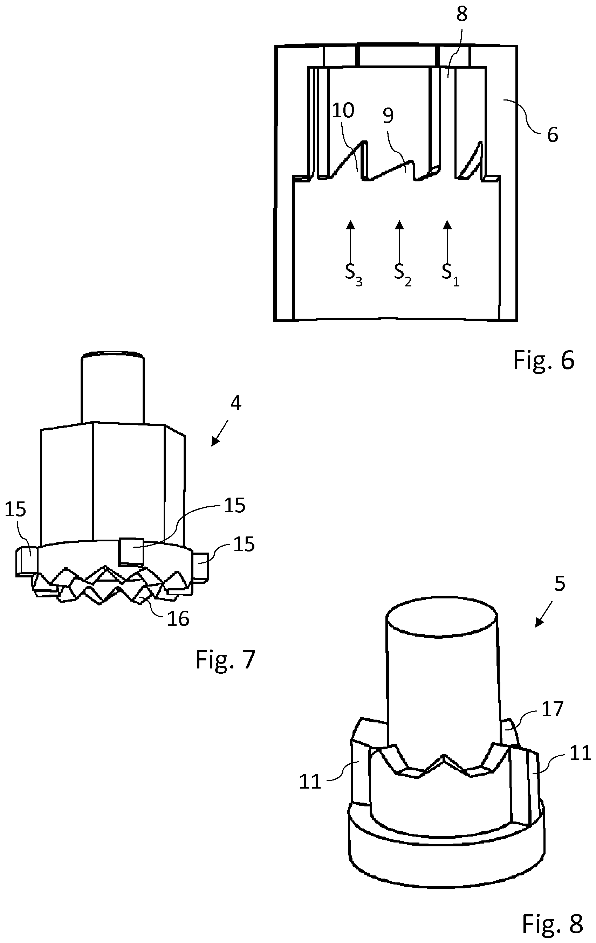

Einzelheiten der Schaltstufen S₁, S₂, S₃ sowie der Rastausnehmungen 8, 9, 10 sind der Darstellung in Fig. 6 zu entnehmen.

Die eine Rastausnehmung 8 ist als ein offener Kanal ausgebildet. In diesem kann das länglich ausgebildete Rastelement 11 tief eindringen, d. h. die Feder 14 kann maximal entspannen und das Ventil 20 die maximal geöffnete Stellung gemäß Fig. 3 einnehmen. Dies entspricht der ersten Schaltstufe S₁ der Schaltvorrichtung 3. Durch Betätigung der Schaltvorrichtung 3 wird nun das Schaltelement 4 und mit diesem das Schaltelement 5 entgegen der Kraft der sich spannenden Feder 14 axial bewegt. Aufgrund der gegeneinander versetzt anliegenden Stirnverzahnungen 16, 17 erfolgt nach Verlassen der kanalförmigen Rastausnehmung 8 des Rastelements 11 eine Relativverdrehung zwischen den beiden Rastelementen 4, 5 bis das Rastelement 11 unterhalb der nächsten Rastausnehmung 9 liegt. Über die Kraft der Feder wird das Rastelement 11 in der dort vorgesehenen Rastausnehmung 9 verrastet. In dieser Position ist die zweite Schaltstufe S₂ erreicht, welche dem voll geöffneten Zustand des Ventils 20 entspricht. Durch erneutes Betätigen der Schaltvorrichtung 3 verlässt das Rastelement 11, gedrückt über das Schaltelement 4, auch die Rastausnehmung 9 und wird über die gegenseitig versetzten Stirnverzahnungen 16, 17 verdreht und tritt im nächsten Schritt in die nächste Rastausnehmung 10 ein. Sodann ist die dritte Schaltstufe S₃ erreicht, welche einer Zwischenstellung des Ventils 20 entspricht.

Es ergibt sich nach dem Kugelschreiber-Prinzip eine taktweise Ansteuerung der verschiedenen Rastausnehmungen 8, 9, 10 und damit verschiedene Schaltzustände des Ventils 20.

Während die Rastausnehmung 8 der voll geöffneten Stellung des Ventils entspricht, entspricht die Rastausnehmung 9 der geschlossenen Stellung und die Rastausnehmung 10 der teilweise geöffneten Zwischenstellung des Ventils 20.

Die beiden Rastausnehmungen 9, 10 sind von zackenförmiger Geometrie und weisen in der Betätigungsrichtung B der Schaltvorrichtung voneinander beabstandete Flanken zur Anlage des Rastelements 11 auf. Aufgrund dieses Abstands der Rastausnehmungen 9, 10 können die verschiedenen Stellungen des Ventils 20 erreicht werden. Durch die vorstehend beschriebene Schaltvorrichtung 3 ergibt sich eine gleichsam einfache wie auch zuverlässige Möglichkeit zur Steuerung des Ventils 20.

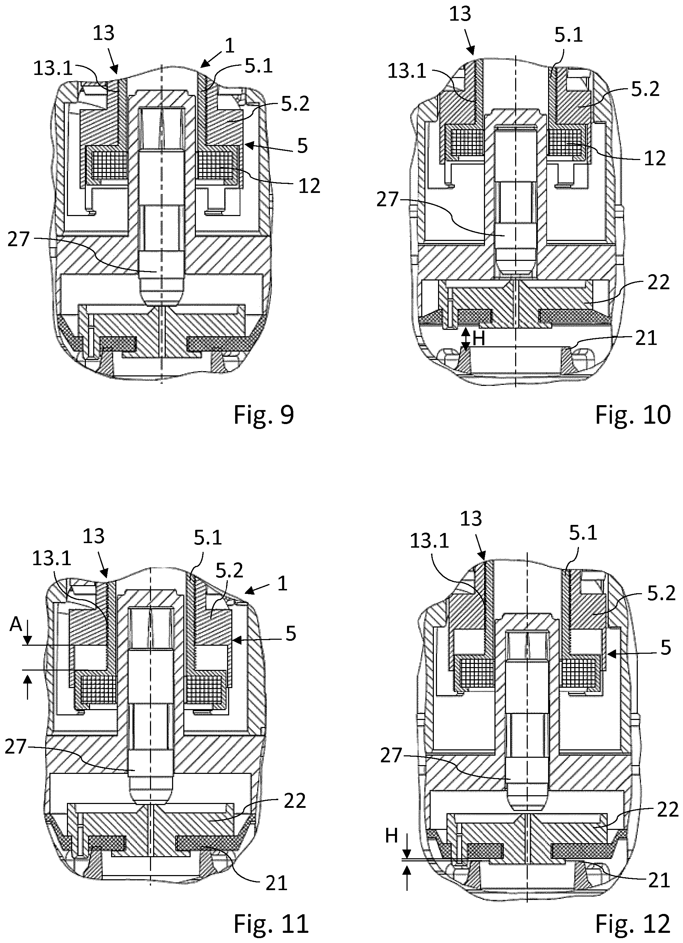

Um zusätzlich zu den über die Schaltvorrichtung 3 ansteuerbaren Einstellungen des Ventils 20 eine weitere Feineinstellung des Ventils 20 erreichen zu können, ist die Steuervorrichtung 1 zusätzlich mit einer als Feineinstellung dienenden Endlageneinstellung 13 versehen, deren Einzelheiten sich den Darstellungen in den Fig. 9 bis 12 entnehmen lassen. Einzelheiten dieser Endlageneinstellung 13 sind z.B. in der EP 2 868 953 B1 I beschrieben.

Die Endlageneinstellung 13 ist als eine Gewindeverbindung 13.1 zwischen zwei gegeneinander verdrehbaren Elementen 5.1, 5.2 der des bewegbaren Schaltelements 5 der Schaltvorrichtung 3 ausgebildet.

Um den Durchfluss des Ventils 20 einstellen zu können, kann die Endlageneinstellung 13 manuell betätigt werden. Dabei werden die beiden Elemente 5.1, 5.2 des Steuerelements 5 gegeneinander verdreht. Das innen liegende Element 5.1 ist mit dem Magneten 12 mechanisch verbunden. Beim Ausführungsbeispiel weist das Element 5.1 hierzu eine stirnseitige Aufnahmeöffnung auf, in welcher der Magnet 12 angeordnet ist. Durch Verdrehen der beiden Elemente 5.1, 5.2, welche gemeinsam eine Art Teleskopspindel bilden, können die beiden Endlagen des Magneten 12 eingestellt werden. Dies wird insbesondere bei einem Vergleich der Darstellungen in Fig. 9 und Fig. 11 deutlich. Beide Figuren zeigen die Schließstellung, jedoch wurden die Endlagen des Magneten 12 bei der Steuereinheit 1 gemäß Fig. 11 über die Endlageneinstellung 13 verstellt. Im Vergleich zu den Endlagen in Fig. 9 wurden die Endlagen gemäß Fig. 11 um einen Abstand A verstellt. Die Endlagen des Magneten 12 liegen in Fig. 11 bzw. Fig. 12 daher näher an dem Ventilsitz 21 des Ventils 20. Beim Umschalten in die Offenstellung gemäß Fig. 12 entfernt sich der Magnet 12 und mit diesem das Steuerelement 27 daher nicht so weit von dem Ventilsitz 21 und das Schließelement 22 kann sich nicht so weit vom Ventilsitz 21 abheben, wodurch sich ein deutlich geringerer Abstand H zwischen dem Ventilsitz 21 und dem Schließelement 22 ergibt. Die Durchflussmenge ist daher geringer als dies bei der Einstellung gemäß den Fig. 9 und 10 der Fall war.

Die Endlageneinstellung 13 kann über von außen zugängliche Schlüsselflächen, beispielsweise in Form eines Innensechskants betätigt werden, die in den Figuren nicht dargestellt sind.

Über die Endlageneistellung 13 kann daher eine Feineinstellung der Durchflussmenge des Ventils 20 zusätzlich zu den in den verschiedenen Schaltstufen S₁, S₂, S₃ vorgesehenen Durchflussmengen realisiert werden.

### Bezugszeichen:

- 1: Steuerungsvorrichtung
- 2: Handbetätigungselement
- 3: Schaltvorrichtung
- 4: Schaltelement
- 5: Schaltelement
- 5.1: Element
- 5.2: Element
- 6: Schaltelement
- 8: Rastausnehmung
- 9: Rastausnehmung
- 10: Rastausnehmung
- 11: Rastelement
- 12: Magnet
- 13: Endlageneinstellung
- 13.1: Gewinde
- 14: Feder
- 15: Führungselement
- 16: Verzahnung
- 17: Verzahnung
- 20: Ventil
- 21: Ventilsitz
- 22: Schließelement
- 23: Membrane
- 24: Tellerelement
- 25: Steueröffnung
- 26: Druckentlastungsöffnung
- 27: Steuerelement
- S₁: Schaltstellung
- S₂: Schaltstellung
- S₃: Schaltstellung
- U: Ventilauslass
- E: Ventileinlass
- B: Betätigungsrichtung
- Hₘₐₓ: Höhe
- H: Höhe
- A: Abstand

## Patentansprüche

1. Steuerungsvorrichtung für ein Ventil (20), insbesondere ein eigenmediumbetätigtes Servoventil, mit einer als Kugelschreiber-Mechanik ausgebildeten Schaltvorrichtung (3) zum Öffnen und Schließen eines Ventils (20), wobei die Schaltvorrichtung (3) drei Schaltstufen (S₁, S₂, S₃) aufweist, und mit einem mit der Schaltvorrichtung (3) gekoppelten Magneten (12),
**dadurch gekennzeichnet,**
**dass** die Schaltvorrichtung (3) eine Endlageneinstellung (13) zur Einstellung einer Endlage des Magneten (12) in einer mittleren Schaltstufe (S₃) aufweist, wobei über die Endlageneinstellung (13) die mittlere Schaltstufe (S₃) feinjustierbar und hierdurch der Durchfluss eines Ventils anpassbar ist.

2. Steuerungsvorrichtung nach Anspruch 1, **dadurch gekennzeichnet, dass** eine erste Schaltstufe (S₁) der geöffneten Stellung eines Ventils (20), eine zweite Schaltstufe (S₂) der geschlossenen Stellung eines Ventils (20) und eine dritte Schaltstufe (S₃) einer Zwischenstellung eines Ventils (20) entspricht.

3. Steuerungsvorrichtung nach Anspruch 1 oder Anspruch 2, **dadurch gekennzeichnet, dass** die Schaltstufen (S₁, S₂, S₃) durch mehrfaches Betätigen der Schaltvorrichtung (3) nacheinander ansteuerbar sind.

4. Steuerungsvorrichtung nach einem der vorhergehenden Ansprüche, **dadurch gekennzeichnet, dass** die Schaltvorrichtung (3) über ein Handbetätigungselement (2) betätigbar ist.

5. Steuerungsvorrichtung nach einem der vorhergehenden Ansprüche, **dadurch gekennzeichnet, dass** die Schaltvorrichtung (3) zum Umschalten zwischen den Schaltstufen (S₁, S₂, S₃) zwei bewegbare Schaltelemente (4, 5) und ein feststehendes Schaltelement (6) aufweist.

6. Steuerungsvorrichtung nach Anspruch 1, **dadurch gekennzeichnet, dass** das feststehende Schaltelement (6) mehrere Rastausnehmungen (8, 9, 10) aufweist, die mit einem an einem bewegbar angeordneten Schaltelement (6) angeordneten Rastelement (11) zusammenwirken.

7. Steuerungsvorrichtung nach Anspruch 6, **dadurch gekennzeichnet, dass** die der ersten Schaltstufe (S₁) entsprechende Rastausnehmung (8) kanalförmig ausgebildet und die der zweiten und dritten Schaltstufe (S₂, S₃) entsprechenden Rastausnehmungen (9, 10) als Rastkonturen ausgebildet sind.

8. Steuerungsvorrichtung nach Anspruch 7, **dadurch gekennzeichnet, dass** die Rastausnehmungen (9, 10) in Betätigungsrichtung (B) der Schaltvorrichtung (3) gegeneinander versetzt angeordnet sind.

9. Ventil, insbesondere eigenmediumbetätigtes Servoventil, **gekennzeichnet durch** eine Steuerungsvorrichtung (1) nach einem der vorhergehenden Ansprüche.

## Claims

1. Control device for a valve (20), in particular an internal-medium-actuated servo valve, having a switching device (3) which is in the form of a ballpoint pen mechanism and which serves for opening and closing a valve (20), wherein the switching device (3) has three switching stages (S₁, S₂, S₃), and having a magnet (12) which is coupled to the switching device (3), **characterized**
**in that** the switching device (3) has an end position setting means (13) for setting an end position of the magnet (12) in an intermediate switching stage (S₃), wherein, via the end position setting means (13), the intermediate switching stage (S₃) is finely adjustable and, in this way, the throughflow of a valve is adaptable.

2. Control device according to Claim 1, **characterized in that** a first switching stage (S₁) corresponds to the open position of a valve (20), a second switching stage (S₂) corresponds to the closed position of a valve (20), and a third switching stage (S₃) corresponds to an intermediate position of a valve (20).

3. Control device according to Claim 1 or Claim 2, **characterized in that** the switching stages (S₁, S₂, S₃) are activatable in succession by multiple actuation of the switching device (3).

4. Control device according to one of the preceding claims, **characterized in that** the switching device (3) is actuable via a manual actuation element (2).

5. Control device according to one of the preceding claims, **characterized in that** the switching device (3) has, for switching between the switching stages (S₁, S₂, S₃), two movable switching elements (4, 5) and one fixed switching element (6).

6. Control device according to Claim 1, **characterized in that** the fixed switching element (6) has multiple latching cutouts (8, 9, 10) which interact with a latching element (11) arranged on a movably arranged switching element (6).

7. Control device according to Claim 6, **characterized in that** the latching cutout (8) corresponding to the first switching stage (S₁) is in the form of a channel, and the latching cutouts (9, 10) corresponding to the second and third switching stages (S₂, S₃) are in the form of latching contours.

8. Control device according to Claim 7, **characterized in that** the latching cutouts (9, 10) are arranged offset from one another in the actuation direction (B) of the switching device (3).

9. Valve, in particular internal-medium-actuated servo valve, **characterized by** a control device (1) according to one of the preceding claims.

## Revendications

1. Dispositif de commande pour une soupape (20), en particulier une servo-soupape actionnée par son propre fluide, comprenant un dispositif de commutation (3) réalisé sous forme de mécanisme du type stylo-bille pour ouvrir et fermer une soupape (20), le dispositif de commutation (3) présentant trois étages de commutation (S₁, S₂, S₃) et comprenant un aimant (12) accouplé au dispositif de commutation (3),
**caractérisé en ce que**
le dispositif de commutation (3) présente un ajustement de position d'extrémité (13) pour l'ajustement d'une position d'extrémité de l'aimant (12) dans un étage de commutation central (S₃), l'ajustement de position d'extrémité (13) permettant l'ajustement de précision de l'étage de commutation central (S₃) et par conséquent l'adaptation du débit d'une soupape.

2. Dispositif de commande selon la revendication 1, **caractérisé en ce qu'**un premier étage de commutation (S₁) correspond à la position ouverte d'une soupape (20), un deuxième étage de commutation (S₂) correspond à la position fermée d'une soupape (20) et un troisième étage de commutation (S₃) correspond à une position intermédiaire d'une soupape (20).

3. Dispositif de commande selon la revendication 1 ou la revendication 2, **caractérisé en ce que** les étages de commutation (S₁, S₂, S₃) peuvent être pilotés les uns après les autres par un actionnement répété du dispositif de commutation (3).

4. Dispositif de commande selon l'une quelconque des revendications précédentes, **caractérisé en ce que** le dispositif de commutation (3) peut être actionné par le biais d'un élément d'actionnement manuel (2).

5. Dispositif de commande selon l'une quelconque des revendications précédentes, **caractérisé en ce que** le dispositif de commutation (3) présente, pour la commutation entre les étages de commutation (S₁, S₂, S₃), deux éléments de commutation mobiles (4, 5) et un élément de commutation fixe (6).

6. Dispositif de commande selon la revendication 1, **caractérisé en ce que** l'élément de commutation fixe (6) présente plusieurs évidements d'encliquetage (8, 9, 10) qui coopèrent avec un élément d'encliquetage (11) disposé au niveau d'un élément de commutation (6) disposé de manière mobile.

7. Dispositif de commande selon la revendication 6, **caractérisé en ce que** l'évidement d'encliquetage (8) correspondant au premier étage de commutation (S₁) est réalisé en forme de canal et les évidements d'encliquetage (9, 10) correspondant aux deuxième et troisième étages de commutation (S₂, S₃) sont réalisés sous forme de contours d'encliquetage.

8. Dispositif de commande selon la revendication 7, **caractérisé en ce que** les évidements d'encliquetage (9, 10) sont disposés de manière décalée les uns par rapport aux autres dans la direction d'actionnement (B) du dispositif de commutation (3).

9. Soupape, en particulier servo-soupape actionnée par son propre fluide, **caractérisée par** un dispositif de commande (1) selon l'une quelconque des revendications précédentes.
